# NEW EUROPEAN PATENT SPECIFICATION

(11) **EP 2 209 850 B2**
(45) Date of publication and mention of the opposition decision: **16.03.2016**
(45) Mention of the grant of the patent: 11.01.2012
(21) Application number: 07827004.8
(22) Date of filing: 07.11.2007
(51) Int. Cl.: C08L 27/04

(54) **COMPOSITION RESISTANT TO CHLORINATED COMPOUNDS, HOSE MADE OF SUCH COMPOSITION AND METHOD OF MANUFACTURING SAME**
GEGENÜBER CHLORIERTEN VERBINDUNGEN BESTÄNDIGE ZUSAMMENSETZUNG, SCHLAUCH DARAUS UND HERSTELLUNGSVERFAHREN DAFÜR
COMPOSITION RÉSISTANT AUX COMPOSÉS CHLORÉS, TUYAU SOUPLE CONSTITUÉ D'UNE TELLE COMPOSITION ET LEUR PROCÉDÉ DE FABRICATION

(30) Priority: 17.10.2007 IT VI20070281
(43) Date of publication of application: 28.07.2010
(73) Proprietor: FITT SPA, 36066 Sandrigo (Vicenza) (IT)
(72) Inventor: MEZZALIRA, Alessandro, I-36066 Sandrigo (IT); MEZZALIRA, Gianmaria, I-36100 Vicenza (IT)
(74) Representative: Autuori, Angelo
(86) International application number: PCT/IB2007/054519
(87) International publication number: WO 2009/050541

(56) References cited:
- GB-A- 2 018 593
- US-A- 5 191 007

## Description

### Field of the invention

The present invention is directed to the art of plastic materials, and particularly relates to a thermoplastic compound material with high resistance to chlorinated compounds and a method of making same.

The present invention further relates to the use of the above compound to make flexible hoses, a flexible hose formed of such compound and a method of making same.

### Background of the invention

Chlorine, which is commonly employed for disinfection of water supply systems of wellness centers and swimming pools is known to considerably jeopardize polyvinyl chloride-containing thermoplastic compounds, and particularly hoses used, for instance, in systems for swimming pools or the like.

Due to its oxidizing action, chlorinated water attacks and degrades the tube, by increasing the roughness and porosity of its inner surface, which is thence more exposed to the abrasion caused by water flow.

When the hose has been weakened by the abrasive effect of water, it is more exposed to water absorption and swelling, which causes with time an irreversible deterioration of its physical and mechanical properties.

Furthermore, these hoses operate continuously under relatively high pressure (even above 10 bar) and are thence exposed to considerable stresses. Such type of hoses, especially when used in heated swimming pools and thermal water centers are further exposed to thermal stresses, caused by relatively high temperatures (even above 55°C).

Therefore, the need has long been felt for a thermoplastic compound material suitable for prolonged contact with chlorinated water, that has a high resistance to the oxidizing and degrading action of chlorinated water and generally of chlorinated compound-containing fluids.

### Summary of the invention

The object of the present invention is to overcome the above drawbacks, by providing a thermoplastic compound that is highly efficient and relatively cost-effective.

A particular object is to provide a thermoplastic compound that can effectively resist the oxidizing and degrading action of chlorinated water.

A further object is to provide a flexible hose formed of such thermoplastic compound that can effectively resist the oxidating and degrading action of chlorinated water.

Another object of the invention is to provide an effective and inexpensive flexible hose.

Yet another object of the invention is to provide a method of making a flexible hose with maximized throughput and minimized scrap.

These and other objects, as better explained hereafter, are fulfilled by a thermoplastic compound material with resistance to chlorinated compounds according to claim 1.

Thanks to this particular configuration, the compound according to claim 1 will be capable of resisting the oxidizing and degrading action of chlorinated water to a greater extent than currently available formulations.

As used herein, the term "PVC matrix" and its derivatives are intended to designate any resin or mixture of resins consisting of polyvinyl chloride.

By way of illustration, a PVC compound material commonly used in the industry has a PVC matrix with a K value close to and not exceeding 70, and a phthalic plasticizer agent with a molecular weight not exceeding 500.

Advantageously, the K value may be in a range from 75 to 100, preferably from 75 to 90 and more preferably of about 80.

The K value is a dimensionless index that can be directly related to the molecular weight of a PVC resin and is used to compare various types of PVC resins. It is determined according to the known standard DIN 53726.

Thanks to the high molecular weight, the polymer chains of the PVC matrix have a high resistance to degradation when in contact with chlorinated water.

The PVC matrix is of the suspension and not of the emulsion type.

Advantageously, the PVC matrix of the thermoplastic compound material according to claim 1 is free of calcium carbonate, which is particularly sensitive to degradation by the chlorinated compounds in an acid environment.

The PVC matrix may represent from 20% to 80%, preferably from 40% to 60% and more preferably about 50% based on the total weight of the compound material.

The plasticizer agent will include polymeric plasticizer compounds with a molecular weight above 2000.

As used herein, the term "plasticizer agent" and its derivatives are intended to designate a compound or a mixture of compounds that can increase flexibility, processability and extensibility of the polymer in which it is incorporated. A plasticizer agent can reduce the viscosity of the melt, lower the second order transition temperatures and the elastic modulus of the product.

The Polymeric Plasticizer is a medium- or high-viscosity plasticizer obtained by a polycondensation reaction between an adipic acid and a glycol (or polyhydric alcohol).

Advantageously, these polymeric plasticizers can have a molecular weight of 2000 to 7000, preferably of 3500 to 5500 and more preferably of about 4600.

Thanks to such high molecular weight, the polymeric plasticizer have a low migration and a good resistance to the oxidizing and degrading action of chlorinated water.

Advantageously, in addition to polymeric plasticizer compounds the plasticizer agent may include phthalate compounds.

Also, the plasticizer agent may suitably represent from 15% to 70%, preferably from 30% to 50% and more preferably about 40% based on the total weight of the compound material.

As used herein, the term "stabilizer agent" and its derivatives are intended to designate a compound or a mixture of compounds that can intercept small molecules resulting from the degradation of the polymer, e.g. HCl, and form a more stable intermediate compound.

The stabilizer agent may represent from 0.1% to 4%, preferably from 1% to 3% and more preferably about 2% based on the total weight of the compound material.

Advantageously, the stabilizer agent may be of the Ca-Zn, Ba-Zn, Ca - organic type.

Preferably, the stabilizer agent will be of the Ca-Zn type and may include calcium stearate, zinc stearate and stearic acid. Also, the stabilizer agent may suitably include epoxidized soybean oil, which may act as a co-stabilizer synergistically with Ca-Zn.

The antioxidant agent may represent from 0.1% to 3%, preferably from 0.5% to 1.5% and more preferably about 1% based on the total weight of the compound material.

As used herein, the term "antioxidant agent" and its derivatives are intended to designate a compound or a mixture of compounds that can intercept the first products of the reaction of the polymer in which it is incorporated with oxygen and to react therewith to form more stable intermediate compounds.

The antioxidant agents may include butylhydroxytoluene and/or may be of the phenol or phosphite type.

Furthermore, the compound material may contain 0.5% to 15%, and preferably 1% to 6% hydrotalcite based on the total weight of the compound material. Hydrotalcite will be particularly useful for further stabilization of the compound, as it blocks the dehydrochlorination sites of PVC.

Furthermore, the compound material may contain 0.5% to 20%, and preferably 3% to 15% polytetrafluoroethylene (PTFE) based on the total weight of the compound material.

Preferably, the plasticizer agent may be different and separate from the stabilizer agent and/or the antioxidant agent, which means that the various agents may consist of different compounds or mixtures of compounds. On the other hand, one compound or one mixture of compounds may serve as multiple agents without departure from the scope as defined by the accompanying claims. For instance, one compound (or one mixture of compounds) may act both as a stabilizer agent and as an antioxidant agent.

The compound material may further include one or more materials designed to act as process adjuvants and/or external or internal lubricants, such as waxes, oils, esters or the like.

In another aspect, the invention relates to a method for preparing the compound according to claim 1, as defined in claim 12.

In yet another aspect, the invention relates to the use of the thermoplastic compound material according to claim 1, as defined in claim 13, for making rigid or semirigid hoses. Particularly, these hoses will be particularly useful for water supply systems of swimming pools, thermal water centers or the like.

In another aspect, the invention relates to a hose for transporting chlorinated water as defined in claim 14.

Advantageously, the hose of the invention may include at least one second layer of a second polyvinyl chloride containing thermoplastic polymeric material, characterized in that the at least one first layer is a film that is evenly attached to the at least one second layer and is designed to contact the chlorinated liquid, wherein the first polymeric material that forms the first layer is the compound material as defined in claim 14.

In a further aspect, the invention relates to a method for making hoses according to claim 20.

Advantageous embodiments of the invention are defined in accordance with the dependent claims.

### Brief description of the drawings

Further features and advantages of the invention will be more apparent upon reading the detailed description of a preferred, non-exclusive embodiment of a compound material, a hose and a method of the invention, which is described as a non-limiting example with the help of the annexed drawings, in which:
FIG. 1 is a sectional view of one embodiment of a hose fabricated using the compound material as defined in claim 14;
FIG. 2 is a sectional view of another embodiment of a hose fabricated using the compound material as defined in claim 14;
FIG. 3 is a partly broken away view of another embodiment of a hose fabricated using the compound material as defined in claim 14;
FIG. 4 is a sectional view of an extrusion head for a hose fabricated using the compound material as defined in claim 14.

### Detailed description of few preferred embodiments

Six samples of the compound material according to claim 1 have been prepared, as described below in Table 1.

**TABLE 1**

| | | **Sample 1** | **Sample 2** | **Sample 3** | **Sample 4** | **Sample 5** | **Sample 6** |
|---|---|---|---|---|---|---|---|
| **PVC matrix** | | K 85; 60 % | K 85; 50 % | K 85; 40 % | K 80; 43 % | K 80; 53 % | K 85; 50 % |
| **Plasticizer agent** | **Polymeric** | m.w. 3500; 15 % | m.w. 4000; 17 % | m.w.4600; 15 % | m.w. 5000; 22 % | m.w. 5500; 17 % | m.w. 4000; 17 % |
| | **Phtalic** | 22 % | 25 % | 22 % | 32 % | 26 % | 26 % |
| **Stabilizing agent** | **Ca stearate** | 0,15 % | 0,12 % | 0,13 % | 0,11 % | 0,14 % | 0,13 % |
| | **Zn stearate** | 0,12 % | 0,1 % | 0,1 % | 0,1 % | 0,11 % | 0,10 % |
| | **Stearic acid** | 0,12 % | 0,10 % | 0,10 % | 0,18 % | 0,11 % | 0,11 % |
| | **Epoxidized soybean oil** | 2 % | 1.8 % | 1.6 % | 1.5 % | 1.8 % | 1.8 % |
| **Antioxidant agent** | **Butylhydroxytoluene** | 0,5 % | 1 % | 0,8 % | 1 % | 1,2 % | 0,9 % |
| | **PTFE** | | 3 % | 15 % | | | |
| | **Hydrotalcite** | | 1.77 % | 5.16 % | | | |
| **Process adjuvants** | **Polyethylene wax** | 0.11 % | 0.11 % | 0.11 % | 0.11 % | 0.11 % | 0.11 % |
| | **Fatty esters** | | | | | 0.53 % | 3.85 % |

For each sample, the first parameter in the PVC matrix line is the K value, and the first parameter in the polymeric plasticizer agent line is the molecular weight (m.w.).

All the samples have been prepared by mixing the various components at a maximum temperature of 110°C to 120°C, and then by extruding them at a maximum temperature of 130°C to 150°C, to obtain a granular polymeric material.

The samples so obtained were tested according to the standards ASTM F 2023 and ASTM F 876, as described hereinbelow.

The granular material obtained from the above formulations was then calendered at a temperature of 145° to 165°C to obtain 1.5 mm thick sheets. Such sheets were cut into "dog-bone" specimens with a length of 78 mm and a width of 4.2 mm for tensile tests. The specimens were weighed on an electronic scale measuring to 4 decimal places and some of them were submitted to a tensile test using a dynamometer. The specimens were produced according to the known standard UNI EN ISO 527.

The tensile testing method is carried out as follows:
- Load cell: 1000 Kg/f
- Strain rate: 20 mm/min
- Pretension: 0.1 N

The following data was obtained from the test: Energy at break (N*m), Breaking strength (N), Elongation at break (%), Travel at break (mm).

By way of comparison, tests were carried out before and after immersion in chlorinated water. Some specimens were subjected to tensile tests before being immersed in chlorinated water. The specimens from the same sheets that had not been subjected to tensile tests, were immersed in an aqueous solution of trichloroisocyanuric acid with a concentration of 8 grams/liter (8000 ppm) and placed in a constant 50°C temperature bath afor 168 hours (1 week). The solution in which the specimens were immersed was obtained using common granular trichloroisocyanuric acid, which is widely used for disinfection of swimming pool water.

At the end of the test, the specimens were weighed again and subjected to the tensile test using the dynamometer, for further data collection. This allowed to determine the changes in the investigated mechanical properties after the test, as well as in sample weights.

The test results are given in the tables hereinbelow. The samples were compared with a "PVC standard" compound prepared using a PVC matrix having a K value of 70, a phthalic plasticizer agent having a molecular weight of about 500, a Ca-Zn stabilizer agent, and an antioxidant agent.

For each sample, the following data was collected before immersion in the chlorinated solution:

| | **Energy at break (N*m)** | **Maximum load (N)** | **Elongation at fracture (%)** | **Travel at break (mm)** |
|---|---|---|---|---|
| **Sample 1** | 9,4421 | 148,6 | 134,635 | 104,74 |
| **Sample 2** | 5,388 | 101,5333333 | 120,284 | 91,597 |
| **Sample 3** | 5,388 | 101,5333333 | 120,284 | 91,597 |
| **Sample 4** | 4,5 | 95 | 125 | 100 |
| **Sample 5** | 5,979333333 | 107,1 | 127,124667 | 96,921 |
| **Sample 6** | 5,388 | 101,5333333 | 120,284 | 91,597 |
| | | | | |
| **Standard PVC** | 1,4488 | 45,3 | 58,5815 | 55,1225 |

For each sample, the following data was collected after immersion in the chlorinated solution:

| | **Shore A** | **Energy at break (N*m)** | **Maximum load (N)** | **Elongation at fracture (%)** | **Travel at break (mm)** |
|---|---|---|---|---|---|
| **Sample 1** | 75 | 8,912 | 149,1 | 137,02 | 104,01 |
| **Sample 2** | 65 | 4,312666667 | 81,2 | 130,1373333 | 100,146 |
| **Sample 3** | 65 | 4,312666667 | 81,2 | 130,1373333 | 100,146 |
| **Sample 4** | 50 | 3,8 | 75 | 130 | 105 |
| **Sample 5** | 65 | 5,412 | 91,0666667 | 145,7686667 | 112,09 |
| **Sample 6** | 65 | 4,312666667 | 81,2 | 130,1373333 | 100,146 |
| | | | | | |
| **Standard PVC** | 62 | 3,35715 | 61,7 | 126,04 | 96,7 |

For each sample, the following changes in the mechanical properties were obtained:

| | **Energy at break (N*m)** | **Maximum load (N)** | **Elongation at fracture (%)** | **Travel at break (mm)** |
|---|---|---|---|---|
| **Sample 1** | 5,9481598 | -0,335345 | -1,740622 | 0,7018556 |
| **Sample 2** | 24,934302 | 25,041051 | -7,571489 | -8,5365367 |
| **Sample 3** | 24,934302 | 25,041051 | -7,571489 | -8,5365367 |
| **Sample 4** | 18,421053 | 26,666667 | -3,846154 | -4,7619048 |
| **Sample 5** | 10,482878 | 17,606149 | -12,79013 | -13,532875 |
| **Sample 6** | 24,934302 | 25,041051 | -7,571489 | -8,5365367 |
| | | | | |
| **Standard PVC** | -56,84435 | -26,58023 | -53,5215 | -42,996381 |

For each sample, the following weight change (%) caused by water absorption was obtained:

| | Shore A | W. Ch. % |
|---|---|---|
| **Sample 1** | 75 | 7 |
| **Sample 2** | 65 | 7 |
| **Sample 3** | 65 | 7 |
| **Sample 4** | 50 | 8 |
| **Sample 5** | 65 | 9 |
| **Sample 6** | 65 | 8 |
| | | |
| **Standard PVC** | 62 | 60 |

The above test results clearly show that all the compound material samples according to claim 1 have retained excellent mechanical properties, higher than those of standard PVC even after immersion in the chlorinated solution. This proves the effective resistance of the compound material according to claim 1 to the oxidizing and degrading action of chlorinated water.

Furthermore, all the samples exhibited an excellent resistance to thermal oxidative degradation, even at high temperatures, due to the higher stability of polymer chains. It is thus apparent that the breaking strength and the elongation at break of all the samples were found to be considerably higher than those of a normal plasticized PVC material.

Also, all the samples exhibited a negligible percentage weight change, which indicates poor water absorption during immersion in the chlorinated solution, which is 8 times lower than in common plasticized PVC.

Upon visual examination, all the samples showed almost no porosity and surface degradation of the material, as compared with common plasticized PVC.

The addition of PTFE (micronized TEFLON) to the formulation ensures surface chemical resistance due to the inertness of this material to most corrosive agents and reduces the Dynamic Coefficient of Friction of water on the inner wall of the hose. This further increases resistance to water erosion, which adds to the above advantages.

The compound material according to claim 1 may be employed to fabricate any article designed for contact with chlorinated water, such as in swimming pools or thermal water centers.

Particularly, the compound material according to claim 1 may be used for fabricate hoses of any type, including flexible, semirigid, spiral, reinforced or rigid hoses.

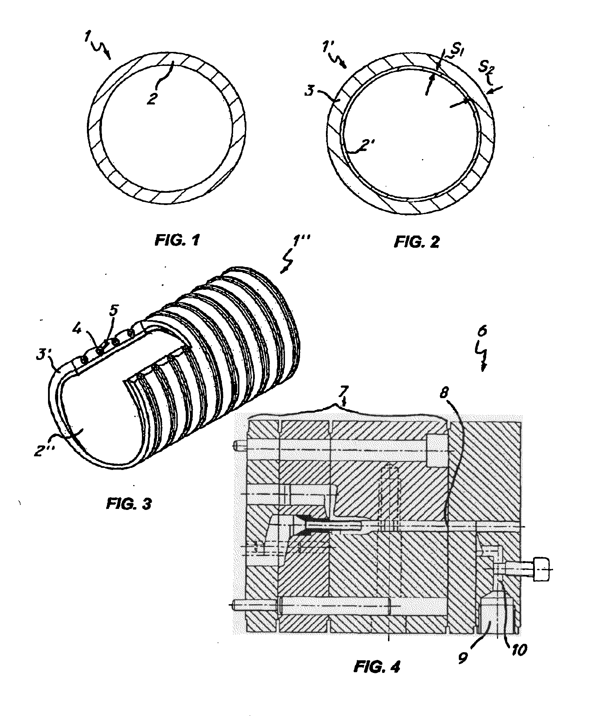

Figures 1, 2 and 3 show various embodiments of a hose comprising at least one layer of a polymeric material which is formed of the compound material as defined in claim 14.

As shown in Figure 1, a hose 1 for carrying chlorinated liquids such as, without limitation, a flexible hose for swimming pool systems and the like, has at least one layer 2 of a thermoplastic polymeric material formed of the compound material as defined in claim 14. The hose 1 may be formed, for instance, by extrusion.

It shall be understood that the hose 1 may also include one or more layers applied to the inner and/or outer sides of the layer 2, without departure from the scope as defined in the annexed claims.

Figure 2 shows a further embodiment of a hose 1' for carrying chlorinated water, particularly for use in swimming pool systems or the like.

The hose 1' will either comprise or be formed of an outer layer 3 which has an inner layer defining a film 2' made of the compound material as defined in claim 14 evenly and directly attached thereto. The film 2' is applied to the inner side of the outer layer 3 and is thus designed to be in contact with chlorinated water.

The outer layer 3 is formed of a polyvinyl chloride-containing thermoplastic polymeric material. For instance, such outer layer 3 may be formed of the above described "standard PVC" with a K value close to 70, and a phthalic plasticizer agent with a molecular weight not exceeding 500.

The direct contact between the materials that form the outer layer 3 and the film 2', as well as their chemically and physically compatible PVC-based composition provide an excellent chemical and/or physical bond between the outer layer 3 and the film 2'.

The thickness S1 of the film 2' may be considerably smaller than the thickness S2 of the outer layer 3. Particularly the ratio between such thicknesses S1:S2 may be in a range from 1:5 to 1:40, preferably from 1:10 to 1:25 and more preferably close to 1:13.

As an indication, the thickness S1 of the film 2' may be in a range from 0.1 mm to 0.6 mm, and preferably of about 0.3 mm, whereas the thickness S2 of the outer layer 3 may be in a range from 2 mm to 6 mm, and preferably of about 4.

The hose 1' so dimensioned will provide particular cost-effectiveness, as well as effective resistance to the oxidizing and degrading action of chlorinated water.

Indeed, the material that forms the outer layer 3 has a much lower cost than the compound material as defined in claim 14, the latter forming the film 2'.

Experimental tests showed the above ratios S1:S2 of layer thicknesses to impart cost-effectiveness and effective chlorinated water-resistance to the hose 1'.

The hose 1' may be fabricated using a method that includes the following steps.

Basically, the first step is the provision of the material for the outer layer 3 and the compound material as defined in claim 14 for the inner film 2', followed by the step of evenly attaching the film 2' to the layer 3. As used herein, the term "provision" and derivatives thereof, designates the preparation of a relevant component for a relevant process step, including any preventive treatment designed for optimal performance of such relevant step, from simple collection and possible storage to purification, addition of adjuvants or excipients, and thermal and/or chemical and/or physical pre-treatments or the like.

Thus, for example, the "standard PVC" and the compound material as defined in claim 14 may be taken, in granular form, from respective containers and introduced in an extruder of known type, which will heat them to their melting point and cause the coextrusion of the film 2' of the inventive compound material on the outer layer 3 of "standard PVC".

Figure 3, show a further embodiment of a flexible hose 1" comprising at least one layer of a polymeric material formed of the compound material as defined in claim 14.

The hose 1" is formed according to the teachings of the European Patent EP-B1-1117958, to be consulted for reference, and may include the features as disclosed in this document.

Particularly, the hose 1" includes an outer bearing layer 3' with a reinforcement spiral 4 embedded therein, which has a peripheral barrier 5 designed to prevent migration of the plasticizer agents from the spiral 4 to the outer layer 3'. A film 2" of a polymeric material formed of the compound as defined in claim 14 may be evenly attached to the inner side of the bearing layer 3'.

The outer bearing layer 3' and the film 2" of the hose 1" may be dimensioned, particularly with reference to the ratio of layer thicknesses, as described above with respect to the embodiment of Figure 2.

The hose 1" may be fabricated using the extrusion head 6 as shown in Figure 4. Such extrusion head 6 has a first section, generally designated by numeral 7, which is constructed according to the teachings of the above mentioned European Patent EP-B 1-1117958.

The nozzle 8 will extrude a "strip" of a polymeric material including the bearing layer 3', the reinforcement spiral 4 and the peripheral barrier 5, still according to the teachings of the above mentioned European Patent EP-B1-1117958, to be consulted for reference.

The compound material as defined in claim 14 is introduced in the feeder 9, preferably in the melted state, and will flow up through the duct 10 to tangentially impinge upon the "strip" extruded by the nozzle 10 thereby evenly attaching the film 2" to the bearing layer 3'.

The strip that comes out of the extrusion head 6 can be processed on a rotating spindle to form the hose 1", still according to the teachings of the above mentioned European Patent EP-B1-1117958, to be consulted for reference.

The above disclosure clearly shows that the invention fulfills the intended objects and particularly meets the requirement of providing a thermoplastic compound material that can effectively resist the oxidizing and degrading action of chlorinated water.

The invention is susceptible of a number of changes and variants, within the inventive principle disclosed in the appended claims. All the details thereof may be replaced by other technically equivalent parts, and the materials may vary depending on different needs, without departure from the scope of the invention.

While the invention has been described with particular reference to the accompanying figures, the numerals referred to in the disclosure and claims are only used for the sake of a better intelligibility of the invention and shall not be intended to limit the claimed scope in any manner.

## Claims

1. A thermoplastic compound material with resistance to chlorinated compounds, comprising:
a. a PVC matrix;
b. a plasticizer agent;
c. a stabilizer agent;
d. an antioxidant agent;
**characterized In that** said PVC matrix consists of polyvinyl chloride having a K value according to (DIN 53726) higher than 70, said plasticizer agent comprising polymeric plasticizer compounds having a molecular weight higher than 2000, said PVC matrix being of the suspension type, said PVC matrix being free of calcium carbonate.

2. Compound material as claimed in claim 1, wherein said PVC matrix comprises polyvinyl chloride having a K value according to DIN 53726 of 75 to 100, preferably from 75 to 90 and more preferably of about 80.

3. Compound as claimed in one or more of the preceding claims, wherein said PVC matrix represents in said compound material from 20% to 80%, preferably from 40% to 60% and more preferably about 50% based on the total weight of the compound material.

4. Compound material as claimed in one or more of the preceding claims, wherein said polymeric plasticizers have a molecular weight of 2000 to 7000, preferably of 3500 to 5500 and more preferably of about 4600.

5. Compound material as claimed in one or more of the preceding claims, wherein said polymeric plasticizer agent further comprises phthalate compounds.

6. Compound material as claimed in one or more of the preceding claims, wherein said plasticizer agent represents in said compound material from 15% to 70%, preferably from 30% to 50% and more preferably about 40% based on the total weight of the compound material.

7. Compound material as claimed in one or more of the preceding claims, wherein said stabilizer agent is of Ca-Zn, Ba-Zn, Ca - organic type, the stabilizer agent of Ca-Zn type eventually including calcium stearate, zinc stearate and stearic acid.

8. Compound material as claimed in one or more of the preceding claims, wherein said stabilizer agent represents in said compound material from 0.1 % to 4%, preferably from 1% to 3% and more preferably about 2% based on the total weight of the compound material.

9. Compound material as claimed in one or more of the preceding claims, wherein said stabilizer agent further comprises epoxidized soybean oil and/or said antioxidant agent comprises butylhydroxytoluene and/or said antioxidant agent is of the phenol or phosphite type.

10. Compound material as claimed in one or more of the preceding claims, wherein said antioxidant agent represents in said compound material from 0.1% to 3%, preferably from 0.5% to 1.5% and more preferably about 1% based on the total weight of the compound material.

11. Compound material as claimed in one or more of the preceding claims, comprising 0.5% to 15%, and preferably 1% to 6% hydrotalcite based on the total weight of the compound material and/or 0.5% to 20%, and preferably 3% to 15% polytetrafluoroethylene based on the total weight of the compound material.

12. A method for preparing a compound material with resistance to chlorinated compounds as claimed in one or more of claims 1 to 11, comprising the steps of:
- preparing a mixture of a PVC matrix, a plasticizer agent, a stabilizer agent and an antioxidant agent at a first maximum operating temperature, and
- extruding the mixture so obtained at a second maximum operating temperature,
**characterized in that** said PVC matrix consists of polyvinyl chloride having a K value (DIN 53726) above 70, said plasticizer agent comprising polymeric plasticizer compounds having a molecular weight above 2000, said PVC matrix being of the suspension type, said PVC matrix being free of calcium carbonate.

13. The use of the compound material as claimed in one or more of claims 1 to 11, for making flexible, rigid or semirigid, possibly spirally-shaped and/or reinforced hoses.

14. A hose for carrying liquids, particularly for swimming pool systems and the like, with resistance to chlorinated compounds, **characterized in that** it comprises at least one first layer (2) of a first thermoplastic polymeric material consisting of a compound material comprising:
a. a PVC matrix;
b. a plasticizer agent;
c. a stabilizer agent;
d. an antioxidant agent;
wherein said PVC matrix consists of polyvinyl chloride having a K value according to (DIN 53726) higher than 70, said plasticizer agent comprising polymeric plasticizer compounds having a molecular weight higher than 2000, said PVC matrix being of the suspension type, wherein said at least one first layer (2) is designed for contact with chlorinated water.

15. Hose as claimed in claim 14, wherein at least one second layer (3; 3') is provided, made of a second polyvinyl chloride-containing thermoplastic polymeric material, **characterized in that** said at least one first layer (2) is a film (2'; 2") uniformly coupled to said at least one second layer (3; 3') to enter into contact with the chlorinated compound, said first polymeric material that forms said first layer (2'; 2") consisting of a compound material as claimed in claim 14.

16. Hose as claimed in claim 15, wherein said film (2'; 2") is applied to the inner side of said at least one second layer (3; 3') and/or is directly coupled with said second layer (3; 3').

17. Hose as claimed in claim 15 or 16, wherein said film (2'; 2") has a thickness (S1) that is smaller than the thickness (S2) of said at least one second layer (3; 3') to which it is coupled.

18. Hose as claimed in one or more of claims 15 to 17, wherein the ratio (S1:S2) between the thickness (S1) of said film (2'; 2") and the thickness (S2) of said at least one second layer (3; 3') to which it is coupled is of 1:5 to 1:40, preferably from 1:10 to 1:25 and more preferably close to 1:13.

19. Hose as claimed in one or more of claims 15 to 18, wherein said second polymeric material comprises polyvinyl chloride having a K value according to DIN 53726 close to 70.

20. A method for making hoses with resistance to chlorinated compounds, particularly as claimed in claims 15 to 19, **characterized in that** it comprises the steps of:
- providing a first thermoplastic polymeric material consisting of a compound material as defined in claim 14;
- providing a second polyvinyl chloride-containing thermoplastic polymeric material;
- coupling in a substantially uniform manner a film (2'; 2") of said first material to at least one layer (3; 3') of said second material.

## Patentansprüche

1. Gegenüber chlorierten Verbindungen beständiges thermoplastisches Verbundmaterial, umfassend:
a. eine PVC-Matrix;
b. einen Weichmacher;
c. einen Stabilisator;
d. ein Antioxidationsmittel;
**dadurch gekennzeichnet, dass** die PVC-Matrix aus Polyvinylchlorid mit einem K-Wert gemäß (DIN 53726) von über 70 besteht, wobei der Weichmacher polymere Weichmacherverbindungen mit einem Molekulargewicht von über 2000 umfasst, wobei die PVC-Matrix vom Suspensionstyp ist, wobei die PVC-Matrix frei von Kalziumkarbonat ist.

2. Verbundmaterial nach Anspruch 1, wobei die PVC-Matrix Polyvinylchlorid mit einem K-Wert gemäß DIN 53726 von 75 bis 100 umfasst, vorzugsweise von 75 bis 90 und mehr bevorzugt von ungefähr 80.

3. Verbundmaterial nach einem oder mehreren der vorstehenden Ansprüche, wobei die PVC-Matrix in dem Verbundmaterial bezogen auf das Gesamtgewicht des Verbundmaterials von 20 Gew.-% bis 80 Gew.-%, vorzugsweise von 40 Gew.-% bis 60 Gew.-% und mehr bevorzugt von etwa 50 Gew.-% repräsentiert.

4. Verbundmaterial nach einem oder mehreren der vorstehenden Ansprüche, wobei die polymeren Weichmacher ein Molekulargewicht von 2000 bis 7000, vorzugsweise von 3500 bis 5500 und mehr bevorzugt von etwa 4600 aufweisen.

5. Verbundmaterial nach einem oder mehreren der vorstehenden Ansprüche, wobei polymeren Weichmacher ferner Phthalatverbindungen umfassen.

6. Verbundmaterial nach einem oder mehreren der vorstehenden Ansprüche, wobei der Weichmacher in dem Verbundmaterial bezogen auf das Gesamtgewicht des Verbundmaterials von 15 Gew.-% bis 70 Gew.-%, vorzugsweise von 30 Gew.-% bis 50 Gew.-% und mehr bevorzugt etwa 40 Gew.-% repräsentiert.

7. Verbundmaterial nach einem oder mehreren der vorstehenden Ansprüche, wobei der Stabilisator vom Typ organisches Ca-Zn, Ba-Zn, Ca ist, der Stabilisator von Ca-Zn Typ schließlich Kalziumstearat, Zinkstearat und Stearinsäure aufweisen kann.

8. Verbundmaterial nach einem oder mehreren der vorstehenden Ansprüche, wobei der Stabilisator in dem Verbundmaterial bezogen auf das Gesamtgewicht des Verbundmaterials von 0,1 Gew.-% bis 4 Gew.-%, vorzugsweise von 1 Gew.-% bis 3 Gew.-% und mehr bevorzugt etwa 2 Gew.-% repräsentiert.

9. Verbundmaterial nach einem oder mehreren der vorstehenden Ansprüche, wobei der Stabilisator ferner epoxidiertes Sojabohnenöl und/oder ein Antioxidationsmittel, das Butylhydroxytoluol umfasst, und/oder ein Antioxidationsmittel vom Phenol- oder Phosphittyp umfasst.

10. Verbundmaterial nach einem oder mehreren der vorstehenden Ansprüche, wobei das Antioxidationsmittel in dem Verbundmaterial bezogen auf das Gesamtgewicht des Verbundmaterials von 0,1 Gew.-% bis 3 Gew.-%, vorzugsweise von 0,5 Gew.-% bis 1,5 Gew.-% und mehr bevorzugt etwa 1 Gew.-% repräsentiert.

11. Verbundmaterial nach einem oder mehreren der vorstehenden Ansprüche, umfassend bezogen auf das Gesamtgewicht des Verbundmaterials 0,5 Gew.-% bis 15 Gew.-% und vorzugsweise 1 Gew.-% bis 6 Gew.-% Hydrotalcit und bezogen auf das Gesamtgewicht des Verbundmaterials 0,5 Gew.-% bis 20 Gew.-% und vorzugsweise 3 Gew.-% bis 15 Gew.-% Polytetrafluorethylen.

12. Verfahren zum Herstellen eines gegenüber chlorierten Verbindungen beständigen Verbundmaterials nach einem oder mehreren der Ansprüche 1 bis 11, umfassend die folgenden Schritte:
- Herstellen einer Mischung einer PVC-Matrix, eines Weichmachers, eines Stabilisators und eines Antioxidationsmittels bei einer ersten maximalen Betriebstemperatur, und
- Extrudieren der auf diese Weise erhaltenen Mischung bei einer zweiten maximalen Betriebstemperatur,
**dadurch gekennzeichnet, dass** die PVC-Matrix aus Polyvinylchlorid mit einem K-Wert (DIN 53726) über 70 besteht, wobei der Weichmacher polymere Weichmacherverbindungen mit einem Molekulargewicht von über 2000 umfasst, wobei die PVC-Matrix vom Suspensionstyp ist, wobei die PVC-Matrix frei von Kalziumkarbonat ist.

13. Verwendung des Verbundmaterials nach einem oder mehreren der Ansprüche 1 bis 11 zur Herstellung flexibler, steifer oder halbsteifer, möglicherweise spiralförmiger und/oder verstärkter Schläuche.

14. Schlauch zum Befördern von Flüssigkeiten, insbesondere für Schwimmbeckensysteme und dergleichen, der gegenüber chlorierten Verbindungen beständig ist, **dadurch gekennzeichnet, dass** er mindestens eine erste Schicht (2) eines ersten thermoplastischen Polymermaterials umfasst, die aus einem Verbundmaterial besteht, umfassend:
a. eine PVC-Matrix;
b. einen Weichmacher;
c. einen Stabilisator;
d. ein Antioxidationsmittel;
wobei die PVC-Matrix aus Polyvinylchlorid mit einem K-Wert gemäß (DIN 53726) von über 70 besteht, wobei der Weichmacher polymere Weichmacherverbindungen mit einem Molekulargewicht von über 2000 umfasst, wobei die PVC-Matrix vom Suspensionstyp ist, wobei mindestens eine erste Schicht (2)dazu geeignet ist, mit chloriertem Wasser in Kontakt zu treten.

15. Schlauch nach Anspruch 14, wobei mindestens eine zweite Schicht (3; 3') bereitgestellt ist, die aus einem zweiten polyvinylchloridhaltigen thermoplastischen Polymermaterial hergestellt ist, **dadurch gekennzeichnet, dass** die mindestens eine erste Schicht (2) eine Folie (2'; 2") ist, die mit der mindestens einen zweiten Schicht (3; 3') gleichmäßig verbunden ist, um mit der chlorierten Verbindung in Kontakt zu treten, wobei das erste Polymermaterial, das die erste Schicht (2'; 2") bildet, aus einem Verbundmaterial nach Anspruch 14.

16. Schlauch nach Anspruch 15, wobei die Folie (2'; 2") an der Innenseite der mindestens einen zweiten Schicht (3; 3') angebracht ist und/oder direkt mit der zweiten Schicht (3; 3') verbunden ist.

17. Schlauch nach einem oder mehreren der Ansprüche 15 bis 17, wobei die Folie (2' ; 2") eine Dicke (S₁) aufweist, die geringer als die Dicke (S₂) der mindestens einen zweiten Schicht (3; 3') ist, mit der sie verbunden ist.

18. Schlauch nach einem oder mehreren der Ansprüche 15 bis 17, wobei das Verhältnis (S₁; S₂) zwischen der Dicke (S₁) der Folie (2' ; 2") und der Dicke (S₂) der mindestens einen zweiten Schicht (3; 3'), mit der sie verbunden ist, 1:5 bis 1:40, vorzugsweise von 1:10 bis 1:25 und mehr bevorzugt etwa 1:13 beträgt.

19. Schlauch nach einem der Ansprüche 15 bis 18, wobei das zweite Polymermaterial Polyvinylchlorid mit einem K-Wert gemäß DIN 53726 nahe 70 umfasst.

20. Verfahren zum Herstellen von gegenüber chlorierten Verbindungen beständigen Schläuchen, insbesondere nach Anspruch 15 bis 19, **dadurch gekennzeichnet, dass** es die folgenden Schritte umfasst:
- Bereitstellen eines ersten thermoplastischen Polymermaterials, das aus einem Verbundmaterial nach Anspruch 14 besteht;
- Bereitstellen eines zweiten polyvinylchloridhaltigen thermoplastischen Polymermaterials;
- im Wesentlichen gleichmäßiges Verbinden einer Folie (2'; 2") des ersten Materials mit mindestens einer Schicht (3; 3') des zweiten Materials.

## Revendications

1. Matériau de composé thermoplastique résistant aux composés chlorés, comprenant :
a. une matrice de PVC;
b. un agent plastifiant;
c. un agent stabilisant;
d. un agent antioxydant;
**caractérisé en ce que** ladite matrice de PVC est constituée de polychlorure de vinyle ayant un indice K selon la norme DIN 53726 supérieur à 70, ledit agent plastifiant comprenant des composés plastifiants polymères ayant une masse moléculaire supérieure à 2 000, ladite matrice de PVC étant de type suspension, ladite matrice de PVC étant dépourvue de carbonate de calcium.

2. Matériau de composé selon la revendication 1, dans lequel ladite matrice de PVC comprend du polychlorure de vinyle ayant un indice K selon la norme DIN 53726 de 75 à 100, de préférence de 75 à 90 et de manière davantage préférée d'environ 80.

3. Matériau selon une ou plusieurs des revendications précédentes, dans lequel ladite matrice de PVC représente dans ledit matériau de composé de 20% à 80%, de préférence de 40% à 60% et de manière davantage préférée d'environ 50% du poids total du matériau de composé.

4. Matériau de composé selon une ou plusieurs des revendications précédentes, dans lequel lesdits plastifiants polymères ont une masse moléculaire de 2 000 à 7 000, de préférence de 3 500 à 5 500 et de manière davantage préférée d'environ 4 600.

5. Matériau de composé selon une ou plusieurs des revendications précédentes, dans lequel ledit agent plastifiant polymère comprend en outre des composés phtalate.

6. Matériau de composé selon une ou plusieurs des revendications précédentes, dans lequel ledit agent plastifiant représente dans ledit matériau de composé de 15% à 70%, de préférence de 30% à 50% et de manière davantage préférée environ 40% par rapport au poids total du matériau de composé.

7. Matériau de composé selon une ou plusieurs des revendications précédentes, dans lequel ledit agent stabilisant est de type Ca-Zn, Ba-Zn, Ca-organique, l'agent stabilisant de type Ca-Zn incluant éventuellement du stéarate de calcium, du stéarate de zinc et l'acide stéarique.

8. Matériau de composé selon une ou plusieurs des revendications précédentes, dans lequel ledit agent stabilisant représente dans ledit matériau de composé de 0,1% à 4%, de préférence de 1% à 3% et de manière davantage préférée environ 2% par rapport au poids total du matériau de composé.

9. Matériau de composé selon une ou plusieurs des revendications précédentes, dans lequel ledit agent stabilisant comprend en outre de l'huile de soja époxydée et/ou ledit agent antioxydant comprend du butylhydroxytoluène et/ou ledit agent antioxydant est de type phénol ou phosphite.

10. Matériau de composé selon une ou plusieurs des revendications précédentes, dans lequel ledit agent antioxydant représente dans ledit matériau de composé de 0,1% à 3%, de préférence de 0,5% à 15%, et de manière davantage préférée environ 1% par rapport au poids total du matériau de composé.

11. Matériau de composé selon une ou plusieurs des revendications précédentes, comprenant 0,5% à 15%, de préférence 1% à 6% d'hydrotalcite par rapport au poids total du matériau de composé et/ou 0,5% à 20%, et de préférence 3% à 15% de polytétrafluoroéthylène par rapport au poids total du matériau de composé.

12. Procédé de préparation d'un matériau de composé résistant aux composés chlorés tel que revendiqué dans une ou plusieurs des revendications 1 à 11, comprenant les étapes suivantes:
- préparer un mélange d'une matrice de PVC, d'un agent plastifiant, d'un agent stabilisant et d'un agent antioxydant à une première température de service maximale, et
- extruder le mélange ainsi obtenu à une seconde température de service maximale,
**caractérisé en ce que** ladite matrice de PVC est constituée de polychlorure de vinyle ayant un indice K selon la norme DIN 53726 supérieur à 70, ledit agent plastifiant comprenant des composés plastifiants polymères ayant une masse moléculaire supérieure à 2 000, ladite matrice de PVC étant de type suspension, ladite matrice de PVC étant dépourvue de carbonate de calcium.

13. Utilisation d'un matériau de composé tel que revendiqué dans l'une quelconque des revendications 1 à 11, pour fabriquer des tuyaux souples, rigides, ou semi-rigides, éventuellement en forme de spirale et/ou renforcés.

14. Tuyau permettant de transporter des liquides, en particulier pour des systèmes de piscine et similaires, résistant aux composés chlorés, **caractérisé en ce qu'**il comprend au moins une première couche (2) d'un premier matériau polymère thermoplastique consitué d'un matériau de composé comprenant:
a. une matrice de PVC;
b. un agent plastifiant;
c. un agent stabilisant;
d. un agent antioxydant;
**caractérisé en ce que** ladite matrice de PVC est constituée de polychlorure de vinyle ayant un indice K selon la norme DIN 53726 supérieur à 70, ledit agent plastifiant comprenant des composés plastifiants polymères ayant une masse moléculaire supérieure à 2 000, ladite matrice de PVC étant de type suspension, dans lequel ledit au moins une première couche (2) est destinée au contact avec l'eau chloré.

15. Tuyau selon la revendication 14, dans lequel au moins une seconde couche (3, 3') est prévue, constituée d'un second matériau polymère thermoplastique contenant du poly(chlorure de vinyle), **caractérisé en ce que** ladite au moins une première couche (2) est un film (2' ; 2") couplé uniformément à ladite au moins une seconde couche (3 ; 3') pour entrer en contact avec le composé chloré, ledit premier matériau polymère qui forme ladite première couche (2' ; 2") étant constitué d'un matériau de composé tel que revendiqué la revendication 14.

16. Tuyau selon la revendication 15, dans lequel ledit film (2' ; 2") est appliqué au côté interne de ladite au moins une seconde couche (3 ; 3') et/ou est directement couplé avec ladite seconde couche (3 ; 3').

17. Tuyau selon la revendication 15 ou 16, dans lequel ledit film (2' ; 2") a une épaisseur (S₁) qui est plus petite que l'épaisseur (S₂) de ladite au moins une seconde couche (3 ; 3') à laquelle il est couplé.

18. Tuyau selon une ou plusieurs des revendications 15 à 17, dans lequel le rapport (S₁ : S₂) entre l'épaisseur (S₁) dudit film (2' ; 2") et l'épaisseur (S₂) de ladite au moins une seconde couche (3 ; 3') à laquelle il est couplé est de 1 : 5 à 1 : 40, de préférence de 1 : 10 à 1 : 25 et de manière davantage préférée proche de 1 : 13.

19. Tuyau selon une ou plusieurs des revendications 15 à 18, dans lequel ledit second matériau polymère comprend du polychlorure de vinyle ayant un indice K selon la norme DIN 53726 proche de 70.

20. Procédé de fabrication de tuyaux résistants aux composés chlorés, en particulier tels que revendiqués dans les revendications 15 à 19, **caractérisé en ce qu'**il comprend les étapes suivantes:
- fournir un premier matériau polymère thermoplastique constitué d'un matériau de composé tel que revendiqué dans la revendication 14;
- fournir un second matériau polymère thermoplastique contenant du poly(chlorure de vinyle) ;
- coupler de manière sensiblement uniforme un film (2' ; 2") dudit premier matériau à au moins une couche (3 ; 3') dudit second matériau.
